# EUROPEAN PATENT SPECIFICATION

(11) **EP 1 157 136 B1**
(45) Date of publication and mention of the grant of the patent: **16.06.2004**
(21) Application number: 99959988.9
(22) Date of filing: 16.12.1999
(51) Int. Cl.: C21B 13/00, C22B 5/14

(54) **METHOD FOR DECREASING ELUTRIATION LOSS OF FINE IRON ORE IN FLUIDIZED BED TYPE REDUCING OPERATION**
VERFAHREN ZUR EINSCHRÄNKUNG DES AUSLAUGUNGSVERLUSTES BEI DER REDUKTION VON FEINEM EISENERZ IM FLUIDATBETT
PROCEDE DE REDUCTION DE LA PERTE PAR ELUTRIATION D'UN MINERAI DE FER FIN DANS DES OPERATIONS DE REDUCTION DU TYPE A LIT FLUIDISE

(43) Date of publication of application: 28.11.2001
(73) Proprietor: POHANG IRON & STEEL CO., LTD., Pohang-si, Kyungsangbook-do 790-300 (KR); RESEARCH INSTITUTE OF INDUSTRIAL SCIENCE & TECHNOLOGY, Pohang-si, Kyungsangbook-do 790-330 (KR); VOEST-ALPINE INDUSTRIEANLAGENBAU GESELLSCHAFT m.b.H., 4031 Linz (AT)
(72) Inventor: KANG, Heung-Won, Res. Inst. Ind. Science & Techn., Kyungsangbook-do 790-330 (KR); CHUNG, Uoo-Chang, Res. Inst. Ind. Scienc. & Techn., Kyungsangbook-do 790-330 (KR); KIM, Hang-Goo, Res. Inst. Ind. Science & Techno., Kyungsangbook-do 790-330 (KR); JEONG, Sun-Kwang, Res. Inst. Ind. Science & Techn., Kyungsangbook-do 790-330 (KR); CHOI, Nag-Joon, Res. Inst. Ind. Science & Techn., Kyungsangbook-do 790-330 (KR); ZSCHETZSCHE, A., Voest-Alpine Ind.anlagenbau GmbH, A-4031 Linz (AT); GENNARI, Udo Voest-Alpine Industrieanlagenbau Gmbh, A-4031 Linz (AT); HAUZENBERGER, F., Voest-Alpine Ind.anlagenbau GmbH, A-4031 Linz (AT)
(74) Representative: Powell, Timothy John
(86) International application number: PCT/KR1999/000776
(87) International publication number: WO 2001/044518

(56) References cited:
- DE-A1- 4 437 549
- PATENT ABSTRACTS OF JAPAN & JP 03 215 621 A (KAWASAKI STEEL CORP) 20 September 1991
- PATENT ABSTRACTS OF JAPAN & JP 02 070 024 A (KAWASAKI STEEL CORP) 08 September 1990
- SOVIET INVENTIONS ILLUSTRATED Section Ch, Week 9513, Derwent Publications Ltd., London, GB; AN 1995-097063, XP002947728 & RU 2 016 099 C1 (ALUMINIUM MAGNESIUM INST) 15 July 1994
- SOVIET INVENTIONS ILLUSTRATED Section Ch, Week 8322, Derwent Publications Ltd., London, GB; AN 1983-53366K, XP002947729 & SU 943 307 A (DON FERR METAL) 15 July 1982

## Description

### FIELD OF THE INVENTION

The present invention relates to a method for decreasing the elutriation loss of a fine iron ore in a fluidized bed type reducing operation for reducing a fine iron ore. More specifically, the present invention relates to a method for decreasing the elutriation loss of a fine iron ore in a fluidized bed type reducing operation, in which an additive is fed together with the fine iron ore, or the fine iron ore is coated with a sludge before feeding it into a fluidized bed type furnace, thereby decreasing the elutriation loss of the fine iron ore.

### BACKGROUND OF THE INVENTION

Currently, the iron ore deposits show a particle size of less than 8 mm in 80% of them, and the iron producing method using a fluidized bed is calling attention as the next generation iron producing method. Therefore, researches and developments are briskly carried out on this method over the whole world including Europe, America, Japan and Korea.

Large iron ore particles can be reduced by using the conventional fixed bed type furnace, but in the case of a fine iron ore particles, if the gas velocity is low as is seen in the fixed bed type furnace, then the reducing operation can be halted due to a sticking phenomenon or the like. Therefore, there is necessarily adopted the fluidized bed type furnace in which the ventilation can be made efficient, and the gas velocity can be made high, so as to make the flow of the solid particles smooth.

Meanwhile, the smelting reduction method includes: a pre-reducing process of reducing the solid iron ore particles by using CO + H₂ (the former being obtained from the natural gas or from coal); and a smelting reduction process of melting the pre-reduced iron ore and finally reducing it.

In the pre-reducing process, an iron ore having a wide particle size distribution is formed into a sintered iron ore or a pellet iron ore, and it is used directly without a pre-treatment like in the conventional blast furnace. However, the sintering process is very troublesome, and therefore, the skipping of the sintering process is demanded.

In this manner, the limitation of the raw material characteristics can be overcome, and the intermediate step of agglomerating the fine iron ore as well as the facility for doing it can be omitted. Thus the fine iron ore can be directly used, and so, a considerable cost saving will be realized.

In this fine iron ore reducing method using the reducing gas, there are required a good permeability and a uniform temperature distribution within the furnace, while the contact areas of the particles have to be made large. For this, the fluidized bed type furnace is a necessity.

As the typical commercial processes for reducing the iron ore by using the fluidized bed, there are DIOS of Japan, and HISMELT and FIOR of Australia.

In the above mentioned processes, however, the sticking of particles occurs during the reduction, and a degradation occurs resulting in that the fine iron ore particles are flown away, and that the recovery rate for the reduced iron is decreased, these being the pending problems.

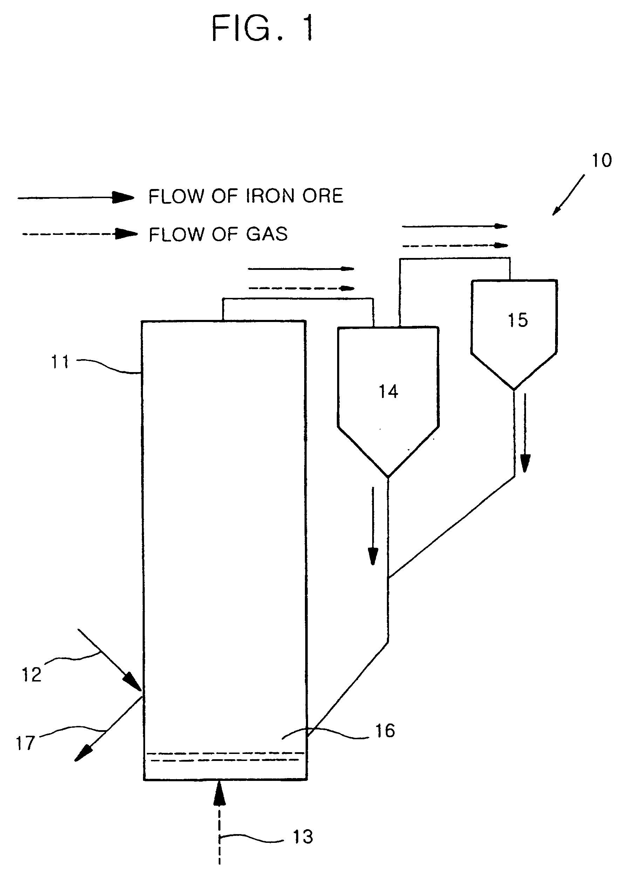

An example of the reducing furnace using the fluidized layer is Japanese Patent Application Laid-open No. Hei-6-306432. This fluidized bed type furnace is illustrated in FIG. 1. As shown in FIG. 1, the fluidized bed type furnace 10 structurally consists of a cylindrical reducing furnace 11 and cyclones 14 and 15. A reducing gas is supplied through a gas supplying hole 13 of the bottom of the cylindrical reducing furnace and through a gas distributor 16. Meanwhile, a fine iron ore is charged through a iron ore charging hole 12 into the furnace. Then the iron ore particles are reacted with the high temperature reducing gas so as for the iron ore to be reduced. After elapsing of a certain time period, the reduced fine iron ore is discharged through an iron ore discharging hole 17.

However, if the particles are agitated in the fluidized bed within the reducing furnace, then a degradation occurs due to the collisions between the particles and due to the frictions between the particles and the furnace wall, thereby further making the particles smaller. As the reaction progresses, the mentioned phenomenon becomes severer due to the thermal impacts and the variation of the internal structure.

According to the experiments of Sato et al, when the fine iron ore particles are reduced at a high temperature within the fluidized bed, the mentioned powderizing occurs, leading to the result that the particle diameter is decreased to a small fraction of the initial diameter. In this manner, the fine iron ore particles are increased. These fine iron ore particles are recycled by a cyclone, or captured by a dust collecting facility to be circulated into the fluidized bed type furnace so as to be reduced. Under this condition, however, the extremely fine particles cannot be captured by the cyclone, but are flown away causing a elutriation loss. Currently, in the DIOS process, the elutriation loss amounts to 10 - 20%, and therefore, if this process is applied to a commercial furnace, a considerable problem will be encountered. In consideration of the productivity in the commercial reducing furnace, the allowable elutriation loss level is about 5%.

Meanwhile, if the gas velocity within the furnace is too high, the fine particle elutriation amount is increased so as to lower the recovery rate. On the other hand, if the flow velocity is too slow, then the coarse particles are segregated to above the gas distributor, thereby impeding the flow of the reducing gas. This leads to a non-uniform reduction and a sticking, resulting in that the reducing operation is halted. This sticking phenomenon has been a serious problem in reducing the coarse iron ore particles. In order to overcome this problem, the iron ore particles are coated with an additive or carbon, but in this case, an additional process is required so as to cause a cost increase.

JP-03-215621 proposes a method for treating iron ore in a fluidised bed type operation that aims to overcome the sticking problem without the need for an additional process. The method comprises steps to control the supply rate of gas and a non-caking material (eg. flux) according to how the temperature varies between three parts of the fluidised bed apparatus.

However, this method does not include steps directed to capturing extremely fine particles and so the elutriation loss remains undiminished.

### SUMMARY OF THE INVENTION

In order to solve the above described conventional problems, the present inventors carried out researches and experiments, and came to propose the present invention based on the results of the researches and experiments.

According to a first aspect of the invention there is provided a method for decreasing an elutriation loss of fine iron ore particles in a fluidized bed type reducing operation by using a fluidized bed type reducing apparatus including: a fluidized bed type furnace for receiving a fine iron ore and a reducing gas (received through its bottom) to form a fluidized bed so as to reduce the fine iron ore and so as to discharge a reduced fine iron ore, and so as to discharge a discharge gas; and a cyclone for capturing the fine iron ore particles from the discharge gas to discharge the discharge gas after its separation from the fine iron ore particles, and to recirculate the fine iron ore particles to the fluidized bed type furnace after their separation from the discharge gas,
the method includes the step of: charging 3 - 6 vol% of limestone (CaCO₃) or dolomite (CaCO₃, MgCO₃) together with the fine iron ore into the fluidized bed type furnace.

Preferably the additive has a particle size of 0.15mm or less.

Therefore it is an advantage of the present invention to provide a method for decreasing the elutriation loss of a fine iron ore in a fluidized bed type reducing operation, in which an additive is fed together with the fine iron ore into a fluidized bed type furnace, thereby decreasing the elutriation loss of the fine iron ore.

### BRIEF DESCRIPTION OF THE DRAWINGS

The above object and other advantages of the present invention will become more apparent by describing in detail the preferred, non-limiting embodiment of the present invention with reference to the attached drawings in which:
FIG. 1 is a schematic elevational view of the conventional fine iron ore reducing fluidized bed type furnace;
FIG. 2 is a schematic elevational view of the experimental fine iron ore reducing fluidized bed type furnace according to the present invention;
FIG. 3 is a schematic elevational view of another embodiment of the experimental fine iron ore reducing fluidized bed type furnace according to the present invention; and

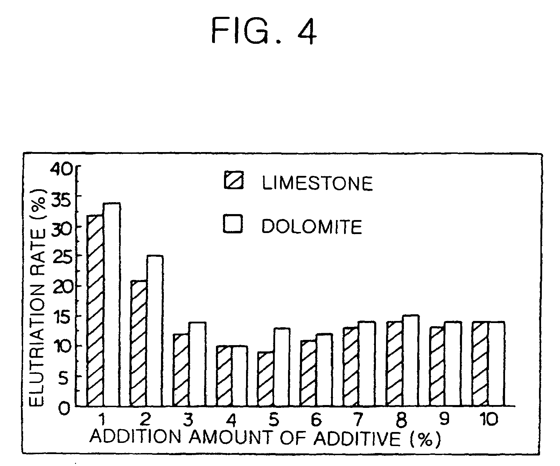

FIG. 4 is a graphical illustration showing the variation of the elutriation rate with respect to the addition amount of the additive.

### DETAILED DESCRIPTION OF THE PREFERRED EMBODIMENTS

The present invention provides a method for reducing a fine iron ore in a fluidized bed type furnace with a cyclone. In fact, however, the present invention can be applied to a multi-stage fluidized bed type reducing apparatus.

In the method for reducing a fine iron ore by using a fluidized bed type furnace and a cyclone, the fine iron ore is charged into the fluidized bed type furnace, and a reducing gas is injected through the bottom of the furnace, to reduce the fine iron ore while forming a fluidized bed. Under this condition, fine particles loaded in the discharge gas move to the cyclone. Then the fine particles are separated from the discharge gas by the cyclone to be circulated to the fluidized bed type furnace, while a part of the fine particles together with large particles are discharge through a discharging hole to the outside of the reducing furnace.

In the case where a fine iron ore with a wide particle size distribution is reduced in the fluidized bed type furnace, the iron ore is degraded at the initial reaction stage, and therefore, sometimes, the newly produced fine particles occupy the greater part. Accordingly, the circulating fine particles are more and more increased as the time elapses. Consequently, if the capacity of the cyclone is smaller than the circulating amount of the fine particles, then the performance of the cyclone is drastically lowered. Further, in this case, the amount of the elutriation loss becomes greater than the amount of the fine particles which return to the reducing furnace. Therefore, the circulating pipe may be clogged, with the result that the total amount of the circulating fine particles are discharged to the outside.

This in turn causes a secondary trouble to the reducing furnace, to the gas purifying facility and to the water treatment system, thereby leading to the halting of the reducing operation.

In order to solve the above problems, the present invention is carried out in such a manner that lime stone particles or dolomite particles of 0.15 mm as an additive are charged together with the fine iron ore into the fluidized bed type furnace, thereby preventing the elutriation loss of the fine iron ore particles and preventing the degradation phenomenon.

The present invention will be described in more details.

That is, the fine additive particles which are charged together with the fine iron ore particles into the reducing furnace have a smaller density, and therefore, all of them depart from the fluidized bed to arrive at the cyclone together with the fine iron ore particles. Then the fine additive particles thus arrived at the cyclone interact with the fine iron ore particles so as for the fine iron ore particles to be coated with the additive particles. Consequently, pseudo particle sizes are increased, and these pseudo particle-sized iron ore particles are recirculated to the reducing furnace. Thus by charging the fine additive particles into the fluidized bed type furnace, the amount of the fine iron ore particles which pass through the cyclone is stabilized to a certain level, thereby maintaining the cyclone at a high performance.

In the present invention, the charging amount of the fine additive particles should be preferably limited to 3 - 6%. The reason is as follows. That is, if the charging amount is less than 3%, then the addition effect is insufficient, while if it exceeds 6%, then the internal temperature of the furnace is liable to be lowered due to the heat absorption decomposition reaction of the additive with the reducing gas.

The particle size of the additive should be preferably 0.15 mm, and this is because the additive particles at this particle size can be easily captured by the cyclone.

Meanwhile, after the powderizing of the fine iron ore particles, the proportion of the particles of 0.1 mm or less is increased to about 30%, this being the generally known fact. Under an assumption that this is true, 10 to 20% of the additive has to be added relative the total amount of the iron ore particles of 0.1 mm or less. It was confirmed by the experiments of the present inventors that this addition range is preferable in view of the decrease of the flight loss of the fine iron ore particles.

In another method, not forming part of the invention, sludge is added to the fine iron ore in an amount of 0.2 - 5.0%, and a mixing is carried out to coat the fine iron ore particles with the sludge. Then a drying is carried out at a temperature of 105 - 800°C for 1 - 24 hours. Thus the fine iron ore particles with the sludge coated thereon are charged into the fluidized bed type furnace, thereby preventing the elutriation loss of the fine iron ore particles and preventing the degradation phenomenon.

The sludge which is usable in the aforementioned method, not forming part of the invention is first the melting furnace sludge which is obtained by water-capturing the dusts of the discharge gas which is discharged from a melting furnace. Second it is the sludge which is obtained by water-capturing the dusts of the discharge gas which is discharged from a fluidized bed type furnace. The typical molten iron manufacturing process includes the COREX process and the FINEX process.

The preferable composition of the sludge includes: 5-50% of T.Fe, 2-20% of SiO₂, 3-30% of CaO, 2-11.5% of Al₂O₃, 1-3.5% of MgO, 2-9% of C, 1% or less of TiO₂, 1% or less of P₂O₅, 1.5% or less of K₂O, 0.1% or less of Na₂O, and 1% or less of S.

Among the above ingredients, CaO, MgO, Al₂O₃ and C prevent the growth of the cellular iron and the consequent sticking between the particles. Further, CaO and MgO prevent the elutriation of the fine iron ore particles, thereby improving the iron recovery rate.

Although CaO, MgO and Al₂O₃ are effective in preventing the sticking phenomenon, if their contents are excessive, then the prestige of the finally reduced iron is lowered, and therefore, their contents should be properly adjusted.

Further, C is a strong sticking preventing agent, and the higher its content, the more effective it is. Further, it produces a reducing gas (C + CO₂ = 2CO) to increase the reducing capability, while it also acts as a heat source and as a reducing gas in the melting furnace so as to make it possible to decrease the use of coal.

Meanwhile, S is an ingredient for prompting the sticking, and therefore, it should be limited to 1% or less.

Meanwhile, the sludge which is coated on the fine iron ore particles should preferably occupy 0.2 - 5.0 wt% of the total amount of the fine iron ore particles. If the amount of the sludge is less than 0.2%, the effect for preventing the sticking and the degradation becomes insufficient. On the other hand, if the amount of the sludge exceeds 5.0%, then the dried sludge is degraded to be flown to the outside of the reaction vessel, thereby possibly causing an operation stop or failure.

In the aforementioned method, not forming part of the invention, by using a rotary kiln device or the like, the above mentioned amount of a sludge suspension fluid is mixed into a raw fine iron ore. Thus the fine iron ore particles are coated with the sludge, and then, a drying is carried out, before charging the coated fine iron ore particles into the reducing furnace.

In the aforementioned method, not forming part of the invention, the above mentioned drying is carried out a temperature of 105 - 800°C for 1 - 24 hours.

If the drying temperature is too low and/or if the drying time is too short, then a sufficient drying cannot be realized. Therefore, if the coated particles are charged into the furnace, then the coated particles are agglomerated, resulting in that the pipes are clogged, and that the fluidizing of the particles within the fluidized bed type furnace is not efficient, thereby possibly leading to an operation stop.

As described above, by coating the fine iron ore particles with the sludge, there can be prevented the degradation of the iron ore particles due to mechanical or thermal impacts. Further, the sticking which occurs over the gas distributor can be effectively prevented, and the productivity loss due to the elutriation loss of the fine iron ore particles can be drastically decreased. That is, if the fine iron ore particles are charged into the fluidized bed type furnace after coating them with the sludge according to the aforementionned method, not forming part of the invention, then the powderizing of the iron ore particles and the consequent elutriation loss and the sticking phenomenon can be prevented owing to the presence of carbon (C), lime stone (CaO) and alumina (Al₂O₃). Further, owing to the generation of the reducing gas (C + CO₂ → 2CO) caused by C, the reaction of the solid fine iron ore particles is promoted. Further, C is the heat source, and therefore, the coal consumption can be decreased, thereby improving the economy.

Meanwhile, in the present invention, the degradation at the initial stage of the reduction can be effectively tackled by charging an additive together with the fine iron ore into a first reducing furnace (for example, a first pre-heating or pre-reducing furnace in a 3-stage fluidized bed type reducing apparatus).

Now the present invention as well as other methods not forming part of the present invention will be described more specifically based on actual examples.

### <Example 1: a method according to the invention>

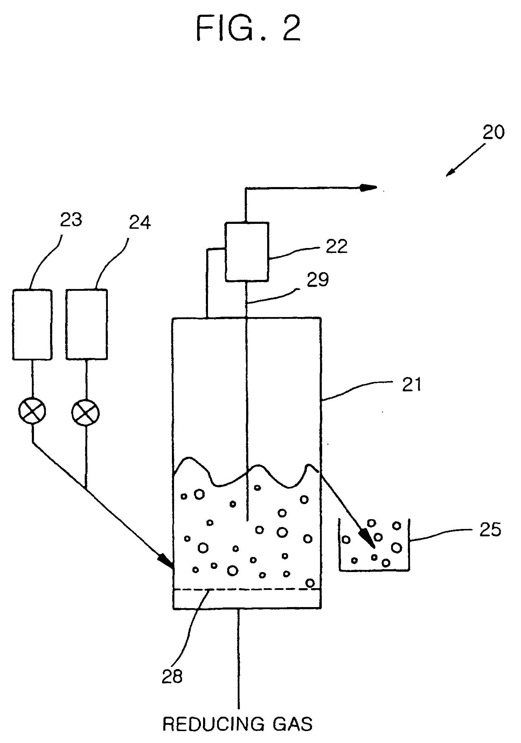

A reducing apparatus illustrated in FIG. 2 and having a size of Table 1 was used to carry out a reduction at conditions set forth in Tables 1 to 6. In this situation, the fine iron ore was charged through a hopper 23 into a fluidized bed type furnace 21, while the additive was charged through an additive hopper 24 into the fluidized bed type furnace 21. The additive was charged at the pre-reducing stage while varying its amount from 1 wt% to 10 wt%.

Then the pre-reduced iron ore was recharged into the fine iron ore hopper 23 by utilizing a movable bin 25, thereby carrying out the final reduction. Referring to FIG. 2, reference code 22 indicates a cyclone, 28 indicates a gas distributor, and 29 indicates a circulating pipe.

After carrying out the pre-reduction and the final reduction in the above described manner, the variation of the elutriation rate with respect to the addition amount of the additive was checked, and the checked results are shown in Table 4 below.

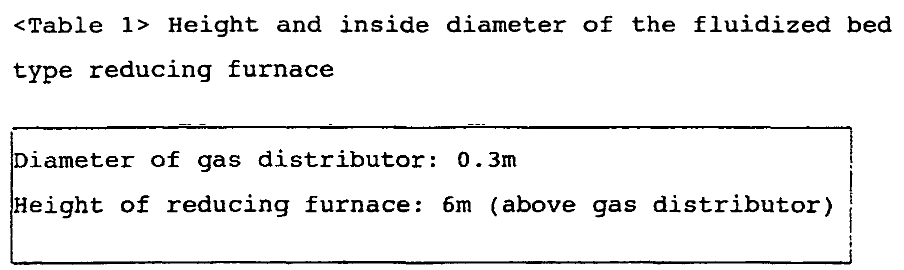

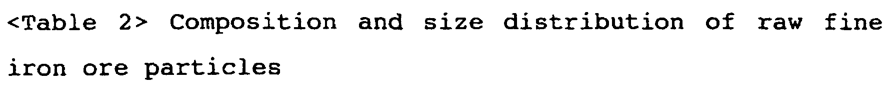

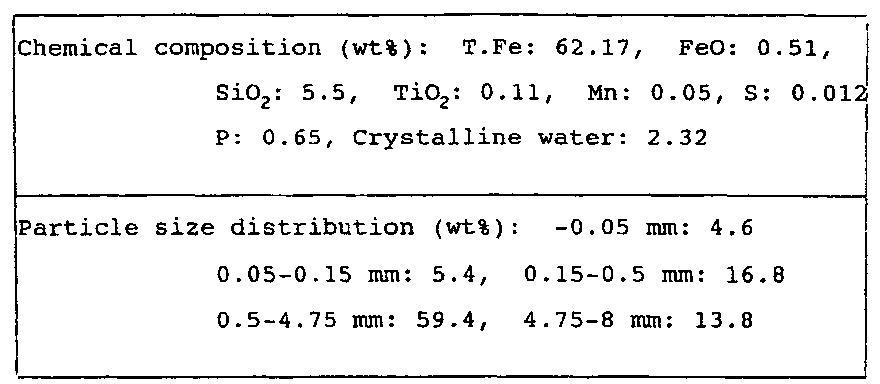

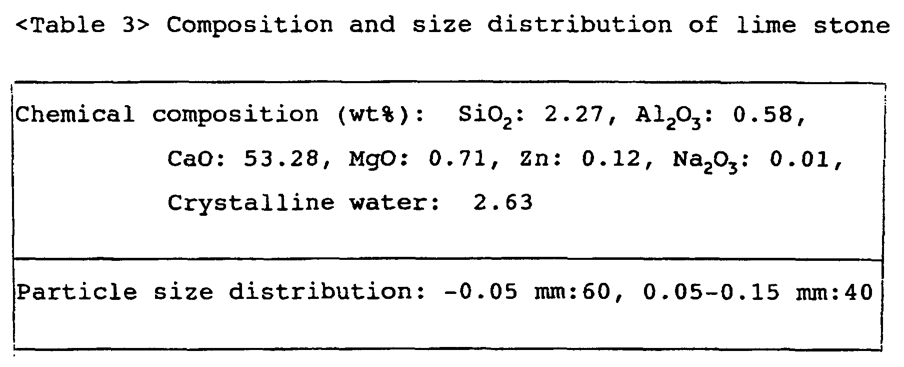

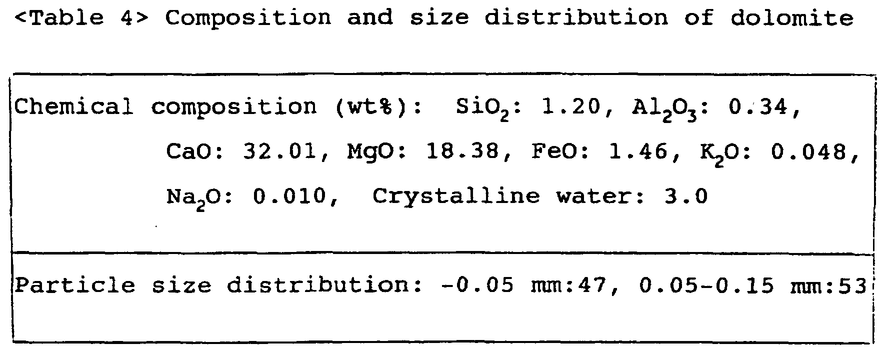

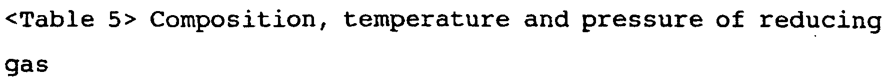

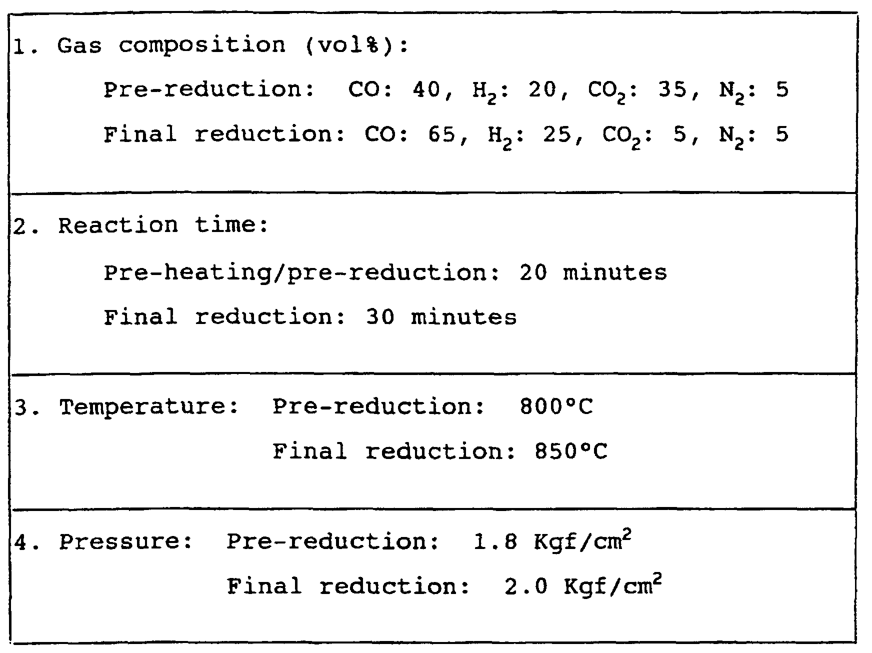

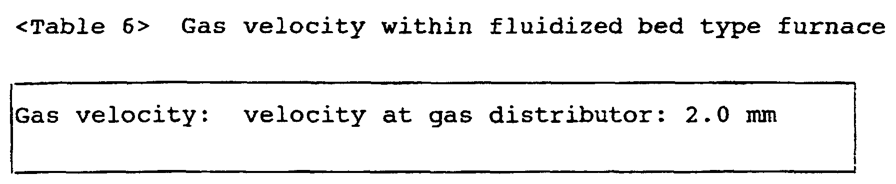

As shown in Table 3 above, if the amount of the additive was too small, the elutriation rate was to high. In the case where the additive addition corresponded to the range of the present invention, the elutriation rate was very low. Further, if the additive addition amount was too large, the elutriation rate was rather high. Meanwhile, in the case where there was added no additive, a elutriation loss of about 40% could be observed.

Meanwhile, The presence and absence of the sticking before and after the additive addition together with the average reduction rate are shown in Table 7 below. As set forth in Table 7, in the case where no additive was added, particle agglomerations occurred in 1 hour after start of the reduction experiment, and therefore, a stable operation could not be carried out due to the non-uniform particle fluidizing, and due to a severe variation of the pressure. On the other hand, in the case where the additive was added, no particle agglomeration occurred owing to the smooth fluidizing of the particles, thereby making it possible to carry out a stable operation. However, it was seen that in the case where the additive was added, the average reduction rate was somewhat lowered. As described above, this can be attributed to the drop of the temperature by the addition of the additive.

**<Table 7>**

| Presence and absence of sticking before and after the addition of additive, and variation of average reduction rate | | | | | | |
|---|---|---|---|---|---|---|
| | Additive | Sticking | | | Reduction rate (%) | |
| | | 0.5-hr | 1-hr | 3-hr | Pre-reduction | final reduction |
| No additive | - | None | Yes | Yes | 24-28 | 81-87 |
| Additive added | Lime stone | None | None | None | 22-26 | 78-85 |
| | Dolomite | None | None | None | 22-26 | 77-85 |

### <Example 2: another method not forming part of the invention>

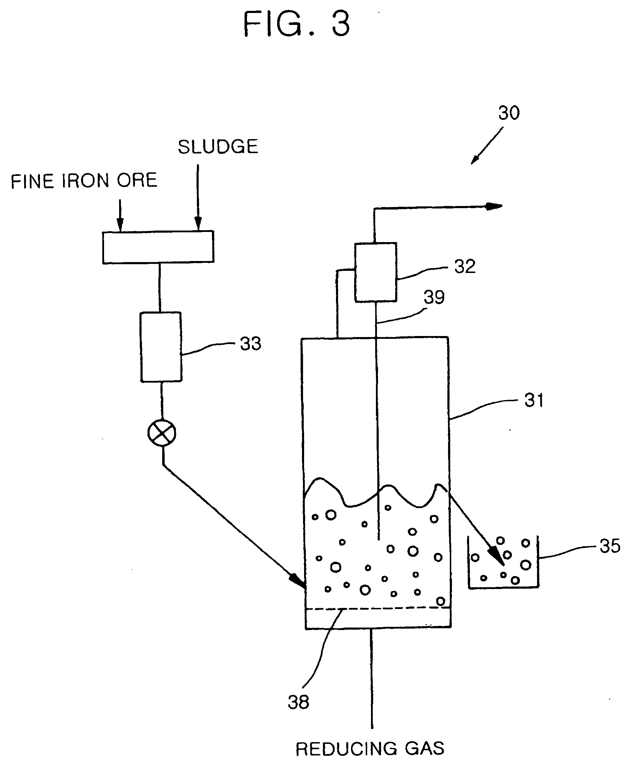

The reducing apparatus 30 of FIG. 3 was used, and a sludge and a raw fine iron ore was mixed together within a rotary kiln 36 to coat the fine iron ore particles with the sludge. Then a drying was carried out, and the dried coated particles were charged through the hopper 33 into the fluidized bed type furnace 31. Then the charged iron ore particles were pre-reduced while forming a fluidizing layer of bubbles and the particles. Under this condition, the mixed amount of the sludge was 2.5% of the total iron ore, and the drying temperature within the rotary kiln 36 was 550°C.

The pre-reduced iron ore was recharged into the fine iron ore hopper 33 by using a movable bin 35, thereby carrying out a final reduction. The reducing apparatus of FIG. 3 was basically same as that of FIG. 2, except the fact that there was used the rotary kiln 36.

The compositions of the sludge and the fine iron ore which were used in this example are as shown in Tables 8 and 9 below. Otherwise, the reduction and operating conditions were same as those of Tables 1, 2, 5 and 6.

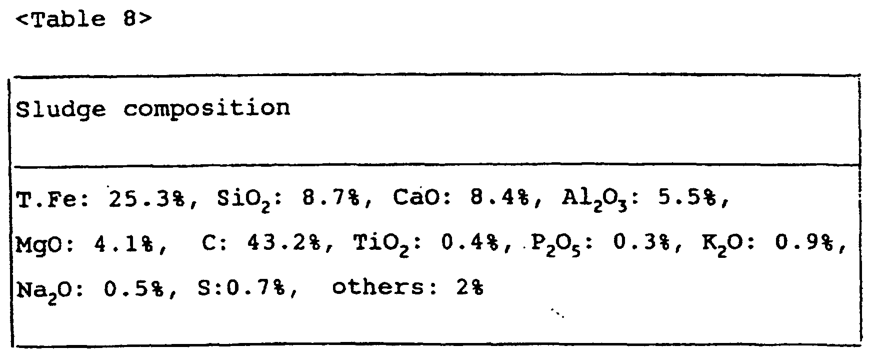

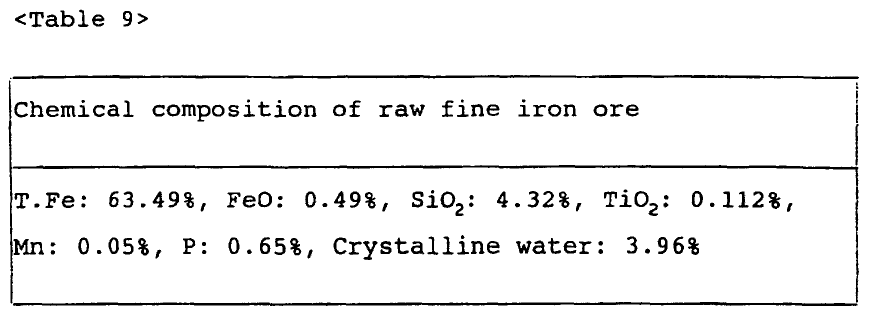

After carrying out the experiment with the above mentioned apparatus and at the above mentioned operating conditions, the particle size distribution of the particles which have been captured by the cyclone 32 was measured, and the results are shown in Table 10 below.

Further, the elutriation losses and the elutriation rates before and after the sludge coating were measured, and the measured results are shown in Table 10 below.

Further, before and after the sludge coating, measurements were carried out on the presence of sticking, the average reduction rate, and the carbon content of the finally reduced iron. The results are shown in Table 11 below.

As could be seen in Table 10, when the elutriation rate was measured at the cyclone 32, the particle size range of the particles which had been flown from the furnace and were detected at the cyclone was 0.005 mm or less. However, as to the amount of the particles which had been flown away to the outside, there was shown a elutriation loss of 40 - 45% in the case where the sludge was not mixed. In contrast to this, in the case where the sludge was mixed, the flight loss was as low as 10 - 15%.

Meanwhile, as shown in Table 11, in the case where the sludge was not mixed, particle agglomerations occurred in 1 hour after the start of the reduction experiment, and therefore, a stable operation could not be carried out due to the non-uniform fluidizing bed and due to a severe variation of the pressure. In contrast to this, in the case where the sludge was mixed, no particle agglomerations occurred, and therefore, a stable operation could be carried out owing to the smooth fluidizing of the particle fluidizing bed. Accordingly, the reduction rates at the respective stages were improved to a significant degree.

After the experiment, the carbon content of the finally reduced iron was measured, and the results were as follows. That is, in the case where the sludge was mixed, the carbon content was increased by 30 - 40 times compared with the case where the sludge was not mixed. This will lead to the advantage that the carbon input can be saved during the charging of the fine iron ore.

**<Table 10>**

| Degradation rate and elutriation rate with respect to particle size distribution before and after sludge coating | | | |
|---|---|---|---|
| Particle size | Size distribution of ore (accumu wt%) | Size distribution with no sludge after experimt (accumu wt%) | Size distribution with sludge after experiment (accumu wt%) |
| 0.005 mm or less | 4.6 | 6.9 | 6.0 |
| 0.15 mm or less | 10.0 | 51.6 | 41.3 |
| 0.6 mm or less | 26.8 | 85.6 | 69.8 |
| 4.75 mm or less | 86.2 | 95.6 | 91.8 |
| 8 mm or less | 100 | 100 | 100 |
| Elutriation loss (%) | | 40 - 45 | 10 - 15 |

**<Table 11>**

| Occurrence of sticking, average reduction rate and variation of carbon content before and after the sludge coating | | | | | | |
|---|---|---|---|---|---|---|
| | Sticking | | | Reduction rate (%) | | Carbon content within reduced iron |
| | 0.5-hr | 1-hr | 3-hr | Pre-reduction | Final reduction | |
| With no sludge | None | Yes | Yes | 24-28 | 81-87 | 0.1-0.4 |
| With sludge mixed | None | None | None | 30-35 | 92-96 | 3-6 |

According to the present invention as described above, an additive is fed together with the fine iron ore thereby decreasing the elutriation loss of the fine iron ore. In this manner, the degradation and sticking of the iron ore particles are prevented, and the elutriation loss of the fine iron ore particles is decreased.

## Claims

1. A method for decreasing an elutriation loss of fine iron ore particles in a fluidized bed type reducing operation by using a fluidized bed type reducing apparatus including: a fluidized bed type furnace for receiving a fine iron ore and a reducing gas received through its bottom to form a fluidized bed so as to reduce the fine iron ore and so as to discharge a reduced fine iron ore, and so as to discharge a discharge gas; and a cyclone for capturing the fine iron ore particles from the discharge gas to discharge the discharge gas after its separation from the fine iron ore particles, and to recirculate the fine iron ore particles to said fluidized bed type furnace after their separation from the discharge gas, **characterised in that**
the method comprises the step of:
charging 3 - 6 vol% of limestone (CaCO₃) or dolomite (CaCO₃, MgCO₃) together with the fine iron ore into said fluidized bed type furnace.

2. The method as claimed in claim 1, wherein the additive has a particle size of 0.15 mm or less.

## Patentansprüche

1. Verfahren zur Verringerung eines Schlämmungsverlusts von feinen Eisenerzteilchen in einem Reduktionsverfahren von Wirbelschichttyp unter Verwendung einer Reduktionsvorrichtung vom Wirbelschichttyp, umfassend: einen Ofen vom Wirbelschichttyp zur Aufnahme eines feinen Eisenerzes und eines Reduktionsgases, aufgenommen durch seine Unterseite, um eine Wirbelschicht auszubilden, um so das feine Eisenerz zu reduzieren und so ein reduziertes feines Eisenerz abzufördern und ein Austrittsgas ausströmen zu lassen; und einen Zyklon zum Einfangen der feinen Eisenerzteilchen aus dem Austrittsgas, um das Austrittsgas nach seiner Trennung von den feinen Eisenerzteilchen abzuführen und die feinen Eisenerzteilchen nach ihrer Trennung vom Austrittsgas im Kreislauf zum genannten Ofen vom Wirbelschichttyp zurückzuführen,
**dadurch gekennzeichnet, dass** das Verfahren den folgenden Schritt umfasst:
Beschicken des genannten Ofens vom Wirbelschichttyp mit 3 - 6 Vol% Kalkstein (CaCO₃) oder Dolomit (CaCO₃, MgCO₃) zusammen mit dem feinen Eisenerz.

2. Verfahren nach Anspruch 1, wobei der Zuschlag eine Teilchengröße von 0,15 mm oder weniger hat.

## Revendications

1. Procédé pour diminuer une perte de fines particules de minerai de fer par élutriation dans une opération de réduction de type à lit fluidisé en utilisant un appareil de réduction de type à lit fluidisé comprenant : un four de type à lit fluidisé pour recevoir un minerai de fer fin et un gaz réducteur reçu à travers le fond de celui-ci pour former un lit fluidisé de façon à réduire le minerai de fer fin et de façon à décharger un minerai de fer fin réduit, et de façon à évacuer un gaz d'évacuation ; et un cyclone pour capturer les fines particules de minerai de fer à partir du gaz d'évacuation afin d'évacuer le gaz d'évacuation après sa séparation d'avec les fines particules de minerai de fer, et pour recycler les fines particules de minerai de fer vers ledit four de type à lit fluidisé après leur séparation d'avec le gaz d'évacuation, **caractérisé en ce que** le procédé comprend l'étape consistant à :
charger 3 à 6 % en volume de carbonate de calcium (CaCO₃) ou de dolomite (CaCO₃, MgCO₃) conjointement avec le minerai de fer fin dans ledit four de type à lit fluidisé.

2. Procédé selon la revendication 1, dans lequel l'additif a une granulométrie de 0,15 mm ou moins.
